# DEMANDE DE BREVET EUROPEEN

(11) **EP 4 294 067 A1**
(43) Date de publication de la demande: **20.12.2023**
(21) Numéro de dépôt: 23179509.7
(22) Date de dépôt: 15.06.2023
(51) Int. Cl.: H04W 12/06, H04W 12/63, H04W 12/77, H04L 9/40

(54) **GESTION DE L AUTHENTIFICATION D'UN TERMINAL POUR ACCÉDER À UN SERVICE D'UN FOURNISSEUR DE SERVICE**

(30) Priorité: 16.06.2022 FR 2205870
(71) Demandeur: Orange, 92130 Issy-les-Moulineaux (FR)
(72) Inventeur: MARCHAND, Hervé, 92326 Chatillon (FR); GASTE, Olivier, 92326 Chatillon (FR)

(57) **Abrégé**

L'invention se rapporte à un procédé d'authentification d'un utilisateur (UT) d'une application stockée sur un terminal, dit premier terminal, apte à communiquer avec un fournisseur de services (SRV) au travers d'une première liaison de communication (RES1), ledit fournisseur requérant une authentification de l'utilisateur de l'application avant une fourniture d'un service à l'application, caractérisé en qu'il comprend les étapes suivantes :
a. réception d'une demande d'accès à une application stockée sur le premier terminal,
b. création d'un code associé à la demande d'accès reçue,
c. Transmission, par le premier terminal, à destination d'un deuxième terminal (TRM2) authentifié, via une deuxième liaison de communication (RES2), d'une demande de fourniture de données d'authentification via un deuxième lien de communication, le demande incluant le code obtenu ;
d. réception, via un troisième lien de communication, du code saisi et des données d'authentification issues du deuxième terminal ;
e. transmission des données d'authentification via la première liaison à destination du fournisseur de services si le code reçu correspond au code transmis.

## Description

### Domaine technique

L'invention se rapporte à un procédé d'authentification d'un utilisateur d'un terminal auprès d'un fournisseur de services.

Le terminal en question englobe tout dispositif de traitement de données, c'est-à-dire équipé de ressources physiques et/ou logicielles dont au moins un microprocesseur, apte à communiquer au travers d'une liaison de communication.

Cette liaison de communication peut être par exemple le réseau Internet.

L'invention s'applique tout particulièrement aux terminaux ne disposant pas de moyens de saisie de données, ou lorsqu'ils en disposent, de moyens de saisie peu ou pas adaptés à la saisie de données d'authentification. Le terminal est par exemple un téléviseur apte à communiquer au travers d'une liaison de communication tel que le réseau Internet.

Les terminaux visés ont aussi la capacité à communiquer des données soit sur via un affichage de données sur un écran soit via tout autres moyens de communication. Lors que les données sont affichées sur un écran, celles-ci peuvent être mises sous forme de code de type QRCode ou tout autres codes similaires (code barre, etc.)

### Etat de la technique

L'ensemble des fournisseurs de services offre à ses clients un accès à des services personnalisés. Un service personnalisé est par exemple l'envoi d'un contenu multimédia (film, musique, etc.), l'envoi d'une page internet incluant des données relatives au compte d'un client utilisateur, etc. Cet accès nécessite une authentification.

Pour accéder au service, d'une manière générale, l'utilisateur utilise un terminal équipé de moyens de saisie avec lesquels il peut saisir des données d'identification et/ou d'authentification telles qu'un identifiant et un mot de passe. A réception, le fournisseur vérifie l'identifiant et le mot de passe et autorise l'accès au service si ces derniers sont corrects.

Le problème est que le terminal en question n'est pas forcément équipé de moyens pour saisir des données, ou s'il est équipé de tels moyens de saisie, ceux-ci ne sont pas forcément adaptés à la saisie de données d'authentification.

Si le terminal n'est pas équipé de moyens de saisie, le service ne peut pas être utilisé via ce terminal car le fournisseur n'a aucun moyen d'authentifier l'utilisateur du compte qui souhaite utiliser le terminal pour l'utilisation d'un service.

Si le terminal est équipé de moyens de commande mais que ceux-ci ne sont pas adaptés à la saisie de données d'authentification, le service peut être utilisé via le terminal mais moyennant une saisie pénible, et source d'erreurs, de données d'authentification telles qu'un identifiant et un mot de passe. Les moyens de commande sont par exemple une télécommande lorsque le terminal est une télévision.

Une solution consiste à introduire dans le procédé d'authentification un terminal de confiance, typiquement un téléphone mobile ou une tablette, situé à proximité et ayant déjà fait l'objet d'une authentification. Lorsqu'un accès à un service est souhaité depuis un terminal dit premier terminal, ce dernier sollicite le terminal de confiance, dit deuxième terminal, via un lien de communication et requiert à ce deuxième terminal de communiquer une donnée d'authentification à un serveur de médiation.

Plus précisément, les étapes sont les suivantes :
Le serveur de médiation, sur requête du premier terminal, par exemple d'une application installée dans le terminal, génère un code de préférence à usage unique.

Le serveur de médiation transmet le code au premier terminal. Le deuxième terminal récupère le code par exemple en photographiant un code 2D et le transmet accompagné d'une donnée d'authentification à destination du serveur de médiation.

Si le code reçu correspond à un code transmis, le serveur médiateur stocke le couple reçu et le met à disposition du fournisseur de service.

Parallèlement, le service TV vérifie périodiquement en interrogeant le serveur de médiation pour savoir si un cookie reçu est associé à un code transmis.

Le serveur de médiation réalise les mêmes étapes à chaque demande d'accès à des services par différents premiers terminaux. Le nombre de codes générés et mémorisés par le serveur de médiation peut donc être important.

Du fait de cette gestion centralisée des codes et du nombre important de codes en cours d'utilisation, les inventeurs ont constaté qu'il existe un risque qu'un utilisateur par mégarde, ou qu'un utilisateur malveillant, saisisse un code d'un autre utilisateur. Cet utilisateur accède alors au service demandé par cet autre utilisateur. Ceci n'est pas acceptable en termes de qualité de services.

L'invention vient améliorer la situation.

### L'invention

L'invention se rapporte à un procédé d'authentification d'un utilisateur d'une application stockée sur un terminal, dit premier terminal, apte à communiquer avec un fournisseur de services au travers d'une première liaison de communication, ledit fournisseur requérant une authentification de l'utilisateur de l'application avant une fourniture d'un service à l'application, caractérisé en qu'il comprend les étapes suivantes dans le premier terminal :
a. réception d'une demande d'accès à une application stockée sur le premier terminal,
b. création d'un code associé à la demande d'accès reçue,
c. transmission, par le premier terminal, à destination d'un deuxième terminal authentifié, via une deuxième liaison de communication, d'une demande de fourniture de données d'authentification via un deuxième lien de communication, le demande incluant le code obtenu ;
d. réception, via un troisième lien de communication, du code saisi et des données d'authentification issues du deuxième terminal ;
e. transmission des données d'authentification via la première liaison à destination du fournisseur de services si le code reçu correspond au code transmis.

Selon l'invention le premier terminal génère le code localement et le communique au deuxième terminal ; le premier terminal reçoit en retour le code depuis le deuxième terminal après saisie du code sur le deuxième terminal. Il suffit alors au premier terminal de vérifier le code reçu, et s'il y a correspondance, le premier terminal poursuit l'authentification auprès du fournisseur. Du fait que la génération du code est gérée en local dans le premier terminal, et qu'en principe une seule personne exécute l'application pour accéder au service, le risque évoqué dans la partie consacrée à l'état de la technique est largement diminué voire inexistant. En outre, la transmission du code, la réception du code saisi sur le deuxième terminal et sa vérification n'implique aucun autre dispositif que le premier et le deuxième terminal ; comme le nombre d'applications à accéder à des services à un instant donné peut être très élevé, l'invention évite une surcharge du premier réseau.

Selon un premier mode de réalisation du procédé, la demande de fourniture comprend des données relatives à la troisième liaison de communication à utiliser pour le transport des données d'authentification depuis le deuxième terminal vers le premier terminal. Ce premier mode est intéressant dans le cas où la deuxième liaison est différente de la troisième liaison. Par exemple, la deuxième liaison de communication peut être unidirectionnelle ; dans ce cas le deuxième terminal est informé du type de liaison à utiliser pour communiquer les données d'authentification au premier terminal.

Selon encore un deuxième mode de mise en oeuvre particulier de l'invention, qui pourra être mis en oeuvre alternativement ou cumulativement avec les précédents, la deuxième liaison et la troisième liaison sont d'un même type. Le premier terminal et le deuxième terminal communique entre eux avec une même liaison de communication ; cela évite au premier terminal de fournir des informations que le un type de liaison de communication à utiliser pour la communication des données d'authentification et du code depuis le deuxième terminal.

Selon encore un troisième mode de mise en oeuvre particulier de l'invention, qui pourra être mis en oeuvre alternativement ou cumulativement avec les précédents, la première liaison de communication est un affichage de données sur un écran du premier terminal aptes à être capturées par le deuxième terminal.

Selon un aspect matériel, l'invention se rapporte à une entité de gestion de l'authentification d'un utilisateur d'une application stockée sur un terminal, dit premier terminal, apte à communiquer avec un fournisseur de services au travers d'une première liaison de communication, ledit fournisseur requérant une authentification de l'utilisateur de l'application avant une fourniture d'un service à l'application, caractérisé en qu'il comprend les modules suivants :
a. Un module de réception d'une demande d'accès à une application stockée sur le premier terminal,
b. Un premier module de création d'un code associé à la demande d'accès reçue,
c. Un module de transmission, par le premier terminal, à destination d'un deuxième terminal authentifié, via une deuxième liaison de communication, d'une demande de fourniture de données d'authentification via un deuxième lien de communication, le demande incluant le code obtenu;
d. Un deuxième mode réception, via un troisième lien de communication, du code saisi et des données d'authentification issues du deuxième terminal ;
e. Un module de transmission des données d'authentification via la première liaison à destination du fournisseur de services si le code reçu correspond au code transmis.

Selon un autre aspect matériel, l'invention se rapporte à un terminal lecteur comprenant une entité de gestion telle que définie ci-dessus.

Selon un autre aspect matériel, l'invention a pour objet un programme d'ordinateur apte à être mis en oeuvre sur une entité de gestion telle que définie ci-dessus, le programme comprenant des instructions de code qui, lorsqu'il est exécuté par un processeur, réalise les étapes du procédé de gestion définies ci-dessus.

Selon un autre aspect matériel, l'invention a pour objet un support de données sur lequel a été mémorisée au moins une série d'instructions de code de programme pour l'exécution d'un procédé de gestion tel que défini ci-dessus.

Le support en question peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur une liaison de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés sur lesquels :
La figure 1 représente un système informatique sur lequel est illustré un exemple de réalisation illustrant un procédé d'authentification selon l'invention.
La figure 2 représente une scène illustrant un exemple de réalisation non limitatif.
La figure 3 est une vue schématique des échanges réalisés relativement à un exemple de réalisation.

### Description détaillée de modes de réalisation de l'invention

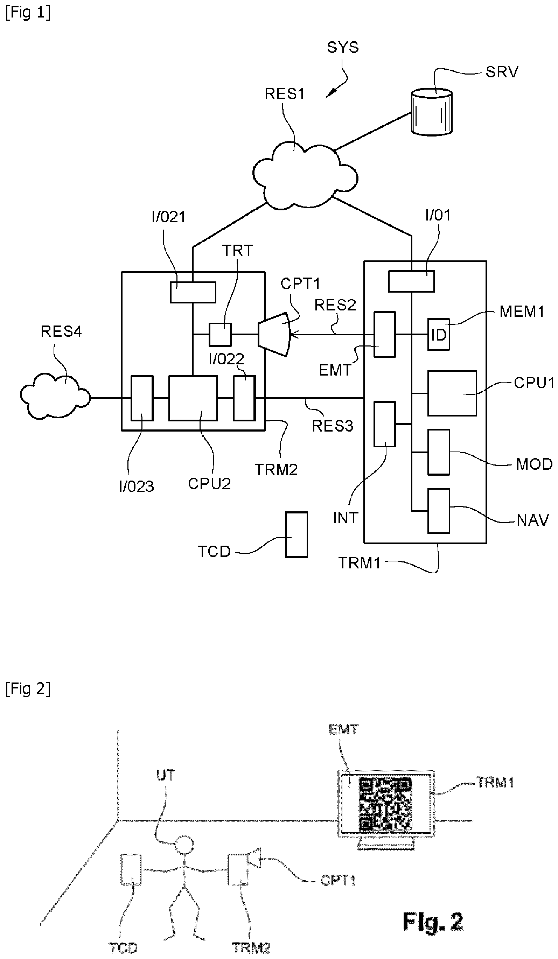

On présente désormais, en relation avec la figure 1, une architecture de téléchargement d'un contenu multimédia.

La figure 1 représente un système SYS comprenant un serveur SRV appartenant à un fournisseur de service et un terminal TRM1, dit premier terminal, connectés entre eux au moyen d'une liaison de communication RES1, dite première liaison par la suite, tel qu'un réseau Internet.

Le système comprend aussi un second terminal TRM2. Ce deuxième terminal TRM2 comprend des moyens d'authentification aptes à authentifier auprès d'un serveur (non représenté) ; ce serveur est par exemple celui d'un opérateur de télécommunications mobile gestionnaire d'un réseau mobile référencé RES4.

Le second terminal TRM2 est apte à recevoir des données issues du premier terminal TRM1 via une deuxième liaison de communication RES2.

Dans notre exemple, cette deuxième liaison RES2 est, de préférence, une liaison à courte portée. Une liaison de courte portée se rapporte ici à une liaison ayant une couverture limitée en distance. Dans ce contexte, le premier terminal peut communiquer des données en deçà d'une distance DIST donnée par l'intermédiaire de la deuxième liaison RES2.

La couverture de la deuxième liaison RES2 est choisie de telle sorte qu'une communication possible entre deux terminaux par le biais de cette deuxième liaison sera le témoin d'une proximité entre les deux terminaux en question et implicitement une proximité de l'utilisateur vis-à-vis des deux terminaux. La deuxième liaison RES2 en question est par exemple une liaison RFiD (Radio Frequency Identification), une liaison Bluetooth.

Nous verrons dans la suite que cette deuxième liaison RES2 peut aussi être constitué par un générateur de code visuel et d'un dispositif de prise de vue capable de prendre une vue du code et d'en extraire une information. Un dispositif de prise de son, ou un émetteur de lumière peuvent aussi être utilisés comme émetteur de signaux, le code étant émis sous la forme d'un son ou de lumière, respectivement.

Plus généralement, le premier terminal TRM1 inclus un émetteur apte à émettre des signaux transportant des données et le deuxième terminal TRM2 inclus un capteur apte à capter les signaux, à savoir un microphone, un détecteur de mouvements, ou un capteur de lumière.

Le second terminal TRM2 est apte à transmettre des données au premier terminal TR1 via une troisième liaison de communication RES3. Comme pour la deuxième liaison RES2, la troisième liaison RES3 est de courte portée.

La deuxième liaison RES2 et la troisième liaison RES3 peuvent être de même type ou de types différents.

L'invention va être illustrée au moyen d'un exemple. Dans cet exemple, en référence aux figures 1 et 2, le premier terminal TRM1 est une télévision comprenant un premier microprocesseur CPU1 apte à communiquer avec un module MOD apte à générer
- des données d'information QRC,
- un code à saisir ODT (cf. figure 2).

Les données d'information QRC peuvent être mises sous forme de code visuel tel qu'un QRCode connu de l'homme du métier. Les données pourraient aussi être transmises par l'intermédiaire de signaux sonores ou lumineux aptes à transporter des données.

Rappelons ici qu'un code 2D est un pictogramme généralement en noir et blanc contenant de l'information.

Le code à saisir ODT est un code permettant au premier terminal TRM1, lorsque celui-transmet une requête associée à ce code, d'identifier par la suite la réponse associée à la requête, cette dernière comportant le code.

Le premier microprocesseur CPU1 est aussi apte à communiquer avec une première mémoire MEM1 apte à stocker le code à saisir.

Le premier microprocesseur CPU1 est aussi apte à communiquer avec des moyens de restitution EMT pour la restitution les données d'information sous forme de QRCode et le code à saisir. Dans notre exemple, les moyens de restitution sont un écran.

L'invention ne se limite pas à ce type de moyens de restitution. Comme indiqué plus haut, un émetteur de son aurait aussi pu être utilisé pour émettre un signal représentatif d'un code.

Le premier microprocesseur CPU1 est aussi apte à communiquer avec des moyens d'interface INT, optionnels, pour communiquer avec une télécommande TCD apte à émettre des commandes via un clavier comprenant des touches à sélectionner. Les touches permettent notamment la sélection de chaînes de télévision, etc.

Naturellement l'invention ne se limite pas aux terminaux équipés d'une télécommande mais s'étend à tout type de terminaux équipés ou non de moyens de commande.

Le premier microprocesseur CPU1 est aussi apte à communiquer avec des moyens d'entrée/sortie I/O1 pour assurer la communication sur la première liaison.

Le premier terminal TRM1 comprend aussi une application qui peut être exécutée afin d'accéder à un service offert par un fournisseur de services. Le service en question est par exemple un service d'accès à des contenus vidéos.

On verra que l'accès au service nécessite une authentification de l'utilisateur de l'application.

Dans notre exemple, le second terminal TRM2 est un téléphone mobile ou tablette ou tout autres dispositifs similaires capables de s'authentifier auprès d'un service. Ce second terminal est équipé dans notre exemple d'une carte SIM (Subscriber Identity Module). Ce module est apte à authentifier l'utilisateur du second terminal relativement à un réseau de communication mobile. Nous ne rentrerons pas dans les détails de l'authentification du second terminal car sans intérêt pour l'exposé de l'invention.

Par abus de langage et pour simplifier la lecture, il est indiqué dans le présent texte que l'utilisateur s'authentifie via le terminal. Il faut noter que, en toute rigueur l'authentification concerne la carte SIM et non l'utilisateur. Cependant, d'une manière générale, chaque carte SIM appartient à un seul et unique utilisateur, une authentification de la carte concernera donc également une authentification de l'utilisateur.

Le téléphone TRM2 comprend en outre un microprocesseur CPU2, dit deuxième microprocesseur apte à communiquer avec des moyens de traitement TRT connectés à des moyens de réception de signaux CPT1 tels que des moyens de prise de vue ; les moyens de réceptions sont par exemple un appareil photo, un microphone, un accéléromètre, un capteur de lumière ; les moyens de traitement sont quant à eux par exemple une application informatique.

Le deuxième microprocesseur CPU2 est aussi apte à communiquer avec des moyens d'entrée/sortie I/O21 aptes à recevoir et à émettre des données sur la première liaison RES1.

Le deuxième microprocesseur CPU2 est aussi apte à communiquer avec des moyens d'entrée sortie I/O23 pour la communication avec le troisième liaison RES4.

Le deuxième microprocesseur CPU2 est aussi apte à communiquer avec des moyens d'entrée sortie I/O22 pour la communication du deuxième terminal vers le premier terminal.

A noter les moyens de stockage MEM1 dans le premier terminal et MEM2 dans le deuxième terminal, décrits ci-dessus sont quelconques ; ceux-ci sont par exemple une mémoire de type Flash, RAM, etc.

Dans notre exemple, le système comprend également une entité ENT capable de générer des codes 2D sur requête. Cette entité dans notre exemple installé dans le premier terminal ; l'entité peut aussi être hors du premier terminal ; dans ce cas de figure, l'entité est par exemple accessible via la première liaison RES1 via une adresse URL (Uniform Resource Locator) sur la liaison Internet.

Le système comprend aussi un fournisseur de services SRV tel qu'un opérateur de télécommunication fournissant des services tels que l'accès à une zone, l'accès à des contenus multimédia, etc. Le fournisseur SRV dispose de ressources informatiques telles qu'un serveur pour fournir ces services. Ce serveur est dans notre exemple connecté à la première liaison de communication RES1 à savoir le liaison Internet.

Dans notre exemple, le premier terminal TRM1 et le fournisseur SRV sont donc reliés entre eux via le réseau Internet.

Dans les exemples qui suivent, on considère que le premier terminal TRM1 et le second terminal TRM2 ne sont pas appariés. Les deux terminaux ne se connaissent donc pas en ce sens que ni l'un ni l'autre ne dispose de moyens de reconnaissance de l'un ou de l'autre. Dans notre exemple, le premier terminal n'a aucun moyen de détecter de seconds terminaux dans son champ de couverture. De plus seuls les seconds terminaux ont la capacité de recevoir un signal issu d'un premier terminal TRM1. L'invention ne se limite pas à cet exemple. Même si cela ne présente pas un grand intérêt, l'invention peut naturellement être mise en oeuvre sur des terminaux appairés et capables de communiquer entre eux.

Un exemple illustrant le procédé de l'invention est décrit ci-dessous. La figure 2 illustre un schéma représentant une scène. Dans cette scène, un utilisateur se trouve dans une pièce, équipé de son téléphone TRM2. Dans cette pièce se trouve une télévision TRM1 connectée au réseau Internet. Comme on l'a vu dans ce qui précède, la télévision comprend une interface INT manipulable par le biais d'une télécommande TCD. La télécommande comporte des touches permettant la sélection de commandes aptes à être émises vers le téléviseur TRM1 pour traitement.

Le but est, pour l'utilisateur, de s'authentifier auprès du fournisseur de services SRV afin de recevoir des services personnalisés comme la possibilité d'utiliser un service sur le premier terminal TRM1.

L'exemple de réalisation comprend deux phases référencées PH1 et PH2
une première phase PH1 au cours de laquelle l'utilisateur du téléphone s'authentifie par exemple auprès d'un opérateur de télécommunication via le second terminal, par exemple via une carte SIM incluse dans le terminal.
une deuxième phase PH2 au cours de laquelle les données d'authentification associées à la première phase sont utilisées pour authentifier la télévision TRM1.

A noter que la première phase peut être réalisée avant la deuxième phase ou au cours de la deuxième phase.

Lors de la première phase PH1, l'utilisateur s'authentifie par le biais du téléphone TRM2. Il en résulte un stockage d'une preuve d'authentification, dans notre exemple un "cookie", dans la deuxième mémoire MEM2. L'utilisateur du téléphone peut par la suite utiliser cette preuve pour utiliser des services en ligne sur la télévision lorsque le fournisseur de services reconnaît la preuve en question comme preuve suffisante.

Rappelons ici qu'en informatique un cookie est défini par le protocole de communication HTTP comme étant une suite d'informations envoyée par un serveur HTTP à un client HTTP, que ce dernier retourne lors de chaque interrogation du même serveur http sous certaines conditions. Le cookie est envoyé dans l'en-tête HTTP par le serveur web au navigateur web qui le renvoie inchangé à chaque fois qu'il accède au serveur. Un cookie peut être utilisé pour une authentification, une session (maintenance d'état), et pour stocker une information spécifique sur l'utilisateur.

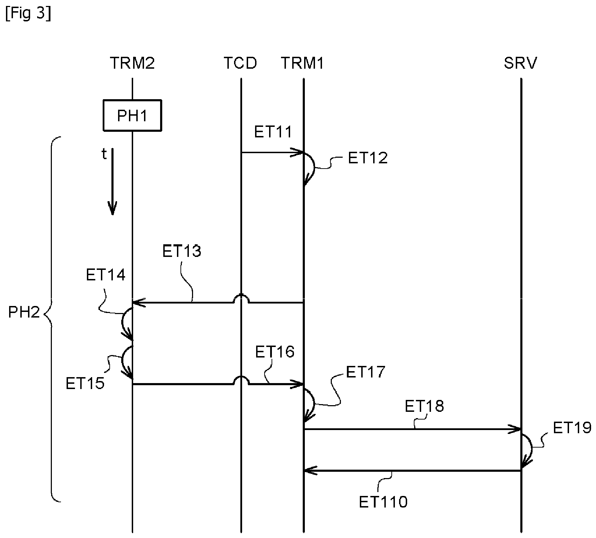

La deuxième phase PH2 se décompose en plusieurs étapes ET11 à ET113. Ces étapes sont décrites en référence à la figure 3 sur laquelle sont représentés des axes TRM2/TCD/TRM1/SRV illustrant l'échange de données qui a lieu entre le premier terminal, la télécommande, le second terminal, et le fournisseur respectivement. Sur cette figure 3 un axe temporel indique le sens d'exécution des étapes de plus, un échange de données est symbolisé par une flèche ayant une origine et une extrémité, l'origine étant associé à l'émetteur d'un message, l'extrémité étant associé au destinataire du message. Aussi, une flèche ayant une origine et une extrémité sur un même axe représente un traitement interne au dispositif.

Lors d'une première étape ET11, l'utilisateur UT utilise la télécommande TCD et sélectionne une commande CDE1, dite première commande, apte à commander une exécution d'une application et donc une demande d'authentification pour utiliser le service correspondant hébergé par le fournisseur de services. A cet instant le premier microprocesseur reçoit la commande CDE1 via l'interface INT.

Lors d'une deuxième étape ET12, le premier microprocesseur CPU1 requiert la création
- d'un code 2D incluant des informations qui permettront au deuxième terminal de communiquer avec le premier terminal pour la communication des données d'authentification ;
- et d'un code ODT similaire à un code PIN (exemple : 421) ; Ce code ODT devra être saisi sur le deuxième terminal TRM2 comme on le verra plus tard.

Dans notre exemple, lors d'une troisième étape ET13, le premier terminal TRM1 affiche sur l'écran le code 2D et le code à saisir sur un autre terminal, ici le deuxième terminal.

On comprend que, si le système comprend plusieurs premiers terminaux, chaque premier terminal gère indépendamment les uns des autres la création des codes. De cette manière, comme une application est exécutée par un seul utilisateur, et qu'un seul code est créé pour l'application visée, une mauvaise saisie du code entraînera un blocage du procédé d'authentification.

Lors d'une troisième étape ET13, dans notre exemple, l'utilisateur utilise son téléphone et photographie le code 2D affiché sur l'écran EMT.

Lors d'une quatrième étape ET14, les moyens de prise de vue CPT1 capturent la photographie, et la transmettent lors d'une cinquième étape ET15 aux moyens de traitement TRT. Les moyens de traitement décodent le code 2D et déduisent des informations. Ces informations ont pour but de requérir au premier terminal de transmettre des données prouvant l'authentification réalisée par le deuxième terminal à destination du premier terminal TRM1.

Dans notre exemple, selon une variante, la requête inclut en outre une indication du type de liaison particulière à utiliser pour la transmission des données d'authentification.

Lors d'une sixième étape ET16, le deuxième microprocesseur CPU2, prend en compte le type de liaison de communication précisé dans la requête reçue et transmet le cookie via cette liaison de communication.

Lors de cette étape ET16, le code ODT affiché sur l'écran du premier terminal TRM1 est saisi sur le deuxième terminal TRM2 et également transmis avec le cookie.

Si le lien de communication n'est pas actif, le deuxième microprocesseur active ce lien et transmet la donnée d'authentification et le code saisi, dans notre exemple le cookie et le code ODT.

Lors d'une septième étape ET17, le premier terminal TRM1 reçoit le cookie et le code ODT et stocke ces informations en mémoire MEM1.

Lors d'une huitième étape ET18, le premier terminal TRM1 compare le code ODT transmis et le code reçu qui a été saisi sur le deuxième terminal TRM2.

S'il y a correspondance entre eux, le premier terminal TRM1 transmet au fournisseur SRV le cookie reçu.

S'il n'y a pas de correspondance entre les codes, le procédé prend fin.

S'il y a correspondance entre les codes, lors d'une neuvième étape ET19, le fournisseur SRV reçoit le cookie comme preuve d'authentification et fournit le service au premier terminal lors d'une dixième étape ET110 si le cookie est accepté comme preuve d'authentification de l'utilisateur UT.

Selon une variante du mode de réalisation décrit ci-dessus, après capture du code 2D, et en réponse, le deuxième terminal, s'il n'est pas équipé d'une liaison de communication telle qu'indiquée dans le code 2D transmet un message de demande d'un autre lien ou de plusieurs autres liens. A réception, le premier terminal répond en indiquant au moins un autre lien de communication pour la transmission du cookie.

Pour la réalisation du procédé, l'entité de gestion comprend
a. Un module de réception d'une demande d'accès à une application stockée sur le premier terminal,
b. Un premier module de création d'un code associé à la demande d'accès reçue,
c. Un module de transmission, par le premier terminal, à destination d'un deuxième terminal (TRM2) authentifié, via une deuxième liaison de communication (RES2), d'une demande de fourniture de données d'authentification via un deuxième lien de communication, le demande incluant le code obtenu;
d. Un deuxième mode réception, via un troisième lien de communication, du code saisi et des données d'authentification issues du deuxième terminal ;
e. Un module de transmission des données d'authentification via la première liaison à destination du fournisseur de services si le code reçu correspond au code transmis.

Précisons enfin ici aussi ici que le terme « entité » ou « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.)

## Revendications

1. Procédé d'authentification d'un utilisateur (UT) d'une application stockée sur un terminal, dit premier terminal, apte à communiquer avec un fournisseur de services (SRV) au travers d'une première liaison de communication (RES1), ledit fournisseur requérant une authentification de l'utilisateur de l'application avant une fourniture d'un service à l'application, caractérisé en qu'il comprend les étapes suivantes dans le premier terminal :
a. réception d'une demande d'accès à une application stockée sur le premier terminal,
b. création d'un code associé à la demande d'accès reçue,
c. Transmission, par le premier terminal, à destination d'un deuxième terminal (TRM2) authentifié, via une deuxième liaison de communication (RES2), d'une demande de fourniture de données d'authentification via un deuxième lien de communication, le demande incluant le code obtenu ;
d. réception, via un troisième lien de communication, du code saisi et des données d'authentification issues du deuxième terminal ;
e. transmission des données d'authentification via la première liaison à destination du fournisseur de services si le code reçu correspond au code transmis.

2. Procédé de gestion selon la revendication 1, **caractérisé en ce que** la demande de fourniture comprend des données relatives à la troisième liaison de communication à utiliser pour le transport des données d'authentification depuis le deuxième terminal vers le premier terminal.

3. Procédé selon la revendication 1, **caractérisé en ce que** la deuxième liaison et la troisième liaison sont d'un même type.

4. Procédé selon la revendication 1, **caractérisé en ce que** la première liaison de communication est un affichage de données sur un écran du premier terminal aptes à être capturées par le deuxième terminal.

5. Entité de gestion (ENT) de l'authentification d'un utilisateur (UT) d'une application stockée sur un terminal, dit premier terminal, apte à communiquer avec un fournisseur de services (SRV) au travers d'une première liaison de communication (RES1), ledit fournisseur requérant une authentification de l'utilisateur de l'application avant une fourniture d'un service à l'application, caractérisé en qu'il comprend les modules suivants :
a. Un module de réception d'une demande d'accès à une application stockée sur le premier terminal,
b. Un premier module de création d'un code associé à la demande d'accès reçue,
c. Un module de transmission, par le premier terminal, à destination d'un deuxième terminal (TRM2) authentifié, via une deuxième liaison de communication (RES2), d'une demande de fourniture de données d'authentification via un deuxième lien de communication, le demande incluant le code obtenu;
d. Un deuxième mode réception, via un troisième lien de communication, du code saisi et des données d'authentification issues du deuxième terminal ;
e. Un module de transmission des données d'authentification via la première liaison à destination du fournisseur de services si le code reçu correspond au code transmis.

6. Terminal lecteur (STB) comprenant une entité de gestion (ENT) telle que définie dans la revendication 5.

7. Programme d'ordinateur apte à être mis en oeuvre sur une entité de gestion (ENT) telle que définie dans la revendication 5, le programme comprenant des instructions de code qui, lorsqu'il est exécuté par un processeur, réalise les étapes du procédé définies dans la revendication 1.

8. Support de données sur lequel a été mémorisée au moins une série d'instructions de code de programme pour l'exécution d'un procédé selon la revendication 1.
